# EUROPÄISCHE PATENTSCHRIFT

(11) **EP 2 482 023 B1**
(45) Veröffentlichungstag und Bekanntmachung des Hinweises auf die Patenterteilung: **22.03.2017**
(21) Anmeldenummer: 11194800.6
(22) Anmeldetag: 21.12.2011
(51) Int. Cl.: F41G 1/38, G02B 7/02, G02B 7/10

(54) **Umkehrsystem für Zielfernrohre**
Inversion system for telescopic sights
Système de retournement pour lunettes de visée

(30) Priorität: 28.01.2011 DE 102011000404
(43) Veröffentlichungstag der Anmeldung: 01.08.2012
(73) Patentinhaber: Schmidt & Bender GmbH & Co. KG, 35444 Biebertal (DE)
(72) Erfinder: Hasselbach, Dieter, 35444 Biebertal (DE); Becker, Klaus, 35075 Gladenbach (DE); Böde, Ulrich, 35644 Hohenahr (DE)
(74) Vertreter: Patentanwälte Olbricht Buchhold Keulertz

(56) Entgegenhaltungen:
- EP-A2- 2 365 274
- DE-U1-202006 000 977
- JP-A- 2010 113 212
- JP-A- 2010 145 432
- US-A1- 2006 007 564
- US-A1- 2010 103 543

## Beschreibung

Die Erfindung betrifft ein Umkehrsystem für Zielfernrohre gemäß dem Oberbegriff von Anspruch 1.

Zielfernrohre werden bei der Jagd und beim Militär dafür eingesetzt mittels Waffen Ziele in großen Distanzen anzuvisieren. Hierfür verfügen sie über eine Linsenanordnung innerhalb eines Gehäuses, die ein Zielobjekt vergrößert. Folglich ist jedoch der Blickwinkel sehr eingeschränkt und Ziele in kürzerer Distanz können schlecht anvisiert werden. Um auch diese Ziele effektiv ins Visier nehmen zu können, sieht der Stand der Technik eine variable Vergrößerung, den so genannten Zoom, vor. Zudem wird das anvisierte Ziel in der Objektivebene seitenverkehrt und auf dem Kopf stehend abgebildet und muss deshalb korrigiert werden.

Zur technischen Umsetzung dieser Korrektur kommt ein Umkehrsystem innerhalb des Zielfernrohres zum Einsatz. Dieses ermöglicht eine axiale Verschiebung von wenigstens einem optischen Element innerhalb des Umkehrsystems, regelmäßig jedoch auch eine unabhängige bzw. definierte Verschiebung von zwei optischen Elementen. Zu den optischen Elementen zählen dabei unter anderem Linsen, Kittlinsen und Absehen. Hierdurch wird das Bild aufgerichtet und in der Okularebene, wo es betrachtet wird, abgebildet. In gängigen Zielfernrohren ist das Absehen in der Objektiv- oder Okularebene vorgesehen und das Umkehrsystem ist in einem Innentubus des Zielfernrohrs angeordnet.

Ein solches Umkehrsystem besteht dabei zumeist aus einer inneren Führungshülse mit einer Linearkulisse, sowie einer Außenhülse mit einer ersten Außenkulisse und optional einer zweiten Außenkulisse, wobei die Außenhülse axialfest und drehbar auf der Innenhülse gelagert ist. Die Linearkulisse ist dabei aus einem einzigen geraden Schlitz gebildet, der parallel zur Mittelachse der Führungshülse verläuft. Die beiden Außenkulissen beschreiben dahingegen eine Kurvenbahn. In der Führungshülse sind weiterhin eine erste und zweite Fassung mit zwei Linsen verschiebbar gelagert. Dabei ist ein erster Führungsstift mit der ersten Fassung verbunden und zumindest teilweise innerhalb der Linearkulisse und der ersten Außenkulisse angeordnet. Äquivalent ist ein zweiter Führungsstift mit der zweiten Fassung verbunden und zumindest teilweise innerhalb der Linearkulisse und der zweiten Außenkulisse angeordnet. Die Abstände zwischen den Linsen des optischen Umkehrsystems und der Objektivebene des Zielfernrohrs können nunmehr variiert werden. Hierdurch kann die Vergrößerung verändert werden und das Bild steht nicht auf dem Kopf.

Kritisch hierbei ist, dass die Linsen sehr genau an den vorgesehenen Positionen angeordnet sein müssen, um ein scharfes Bild für den Schützen erzeugen zu können. Positionsabweichungen von 10⁻⁵ m sind bereits abträglich für die Bildgüte und führen zu Parallaxefehlern. D.h. die Zielmarkierung und der tatsächliche Treffpunkt eines Projektils weichen von einander ab. Deshalb sind alle beweglichen Bauteile mit sehr engen Toleranzen auszulegen und dürfen zueinander nahezu kein Spiel haben. Oftmals wird sogar ein Übermaß gewählt, um Spiel zu verhindern. Folglich kommt es zu einem schwergängigen Verstellverhalten des Umkehrsystems. Besonders kritisch sind die Kontaktbereich zwischen den Führungsstiften und den Kulissen.

Für den Eingriff der Führungsstifte in die Kulissen sind im Stand der Technik unter anderem Metallschrauben bekannt. Die Außenhülse mit den Kurvenbahn-Kulissen, besteht ebenfalls aus Metall. Bei einer derartigen Kombination von Metallschraube mit Metall-Außenhülse ist ein gewisses Grundspiel vorhanden, wodurch die Metallschraube in der Kurvenbahn verschoben werden kann. Ein derartiges Grundspiel hat jedoch den Nachteil, dass die Umkehrlinsen nicht definiert ausgerichtet sind und dies ursächlich für eine Parallaxeabweichung sein kann. Reduziert man das Spiel auf ein Minimum führt dies bei wetterbedingten thermischen Schwankungen zu einem Verklemmen durch die Wärmeausdehnungen der Bauteile. Dies verhindert nicht nur eine momentane Verstellbarkeit, sondern führt auch zu dauerhaften Schäden bei einer zu kräftigen Betätigung durch den Schützen. Besonders häufig treten diese Probleme bei sehr tiefen Temperaturen, z.B. -40 °C, auf.

In einer bekannten Weiterentwicklung des Standes der Technik sind Führungsstift und Außenhülse aus Metall hergestellt, wobei jedoch der Führungsstift bereichsweise mit einer Ummantelung aus Kunststoff umgeben ist. Der derart ummantelte Führungsstift weist im ummantelten Bereich einen Außendurchmesser auf, der größer ist als die Kulissen breit sind. Der Führungsstift greift mit seiner Ummantlung mit Übermaß in die Linearkulisse und Außenkulisse ein. Dies führt dazu, dass zunächst einmal das die Parallaxe verursachende Spiel nicht entsteht. Jedoch hat sich gezeigt, dass sich auch eine solche Umkehrvorrichtung bei sehr niedrigen Temperaturen verklemmt.

Weiterhin bekannt ist aus DE 20 2006 000 977 U1 ein Führungsstift, insbesondere eine Führungsschraube, mit einem ersten Ummantelungselement und einem zweiten Ummantelungselement zur Ummantelung der Schraube. Dabei ist das erste Ummantelungselement auf der Schraube angeordnet und das zweite Ummantelungselement ist auf dem ersten Ummantelungselement angeordnet. Weiterhin ist das zweite Ummantelungselement mit Übermaß zur Kulisse ausgelegt und das erste ohne. Bei der Montage wird das zweite Ummantelungselement somit verformt. Bei einer weiteren schusskraftbedingten plastischen Verformung des zweiten Ummantelungselements wird die Verformung durch das erste Ummantelungselement beschränkt. Hierzu ist eine Schulter am ersten Ummantelungselement vorgesehen, die nach einer Überschreitung einer bestimmten plastischen Verformung des zweiten Ummantelungselements den Führungsstift gegen wenigstens eine der Kulissen abstützt. Somit kommt das erste Ummantelungselement nur bei starker Belastung des zweiten Ummantelungselements mit einer der Kulissen in Berührung.

Nachteilig ist jedoch auch hier, dass ein Umkehrsystem mit einem solchen Führungszapfen bei sehr niedrigen Temperaturen verklemmt, insbesondere deshalb weil der Kunststoff spröde und unelastisch wird. Dies kann in Verbindung mit dem Übermaß und unterschiedlichen Wärmeausdehnungskoeffizienten der verwendeten Materialien und somit der Bauteile zu einem Zerbrechen des zweiten Ummantelungselements führen.

Aufgabe der Erfindung ist daher, eine Umkehrvorrichtung zu entwickeln, die in einem sehr großen Temperaturspektrum und insbesondere auch bei sehr niedrigen Temperaturen zerstörungsfrei und komfortabel einsetzbar ist, ohne dass Einbußen bei der Bildqualität und der Parallaxegenauigkeit auftreten. Die Lösung sollte einfach herstellbar, montierbar und kostengünstig sein, sowie eine lange Lebensdauer erreichen. Vorzugsweise sollte die Lösung auch geeignet sein Zielfernrohre nachrüsten zu können.

Hauptmerkmale der Erfindung sind im kennzeichnenden Teil von Anspruch 1 angegeben. Ausgestaltungen sind Gegenstand der Ansprüche 2 bis 15.

Bei einem Umkehrsystem für Zielfernrohre mit einer Führungshülse in der eine Linearkulisse angeordnet ist, wobei eine Außenhülse mit einer Außenkulisse axialfest und drehbar auf der Führungshülse gelagert ist, und in der Führungshülse eine Fassung mit einem optischen Element und mit einem die Linearkulisse und die Außenkulisse durchdringenden Führungsstift axialverschieblich gelagert ist, sieht die Erfindung vor, dass der Führungsstift eine erste Hülse und eine zweite Hülse aufweist, wobei beide Hülsen auf einer gemeinsamen Achse gelagert sind, und die erste Hülse innerhalb der Außenkulisse bewegbar ist und die zweite Hülse innerhalb der Linearkulisse bewegbar ist.

Kräfte die von der Linearkulisse auf den Führungsstift übertragen werden, verlaufen somit wenigstens teilweise durch die zweite Hülse. Gleichermaßen verlaufen Kräfte die von der Außenkulisse auf den Führungsstift übertragen werden wenigstens teilweise durch die erste Hülse. Je nach Position des Führungsstiftes in der Linear- und Außenkulisse wirken unterschiedliche Kräfte auf die erste Hülse und die zweite Hülse ein. Scherspannungen und Spannungsspitzen durch entgegengesetzt wirkende Kräfte auf die erste und die zweite Hülse addieren sich bei erfindungsgemäßer Lösung nicht. Plastischen Verformungen und Materialbrüche treten auch bei sehr hohen und sehr niedrigen Temperaturen nicht auf.

Dabei ist die erfindungsgemäße Umkehrvorrichtung äußerst kostengünstig und montagefreundlich. Die notwendigen Hülsen und die Achse lassen sich einfach herstellen und ein derartiger Führungsstift lässt sich nicht nur in einem neuen Umkehrsystem einsetzen, sondern auch bestehende Umkehrsysteme können mit einem solchen Führungsstift aufgerüstet werden.

Als optische Elemente können unter anderem Linsen, Kittlinsen oder Absehen in der Fassung angeordnet sein.

Erfindungsgemäß sind die beiden Hülsen axial versetzt und benachbart auf der Achse gelagert. Hierdurch ist die Montage des Führungsstifts sehr einfach. Insbesondere ist zuerst die erste Hülse und dann die zweite Hülse auf die Achse aufzuschieben und die Achse anschließend mit der Fassung zu verbinden.

Die Außenkulisse ist regelmäßig eine Kurvenbahn. Diese hat zumeist eine spiralformähnliche Gestaltung, wobei jedoch meist keine konstante Steigung vorliegt. Somit ist auch der Vorschub der Fassung mit dem optischen Element je Verdrehungseinheit nicht konstant. Mittels der Kurvenbahn lässt sich so das Verstellverhalten an die optischen Effekte der Linse je nach Anordnungsposition anpassen. In sensiblen Positionen kann eine flache Steigung und in weniger sensiblen Positionen eine steilere Steigung vorgesehen werden. Zu steile Steigungen sind jedoch zu vermeiden, da bei diesen eine Selbsthemmung der Umkehrvorrichtung auftreten kann. Der Schütze kann nunmehr den Verstellbereich komfortabel nutzen und ein dazu vorgesehenes Stellrad kontinuierlich verdrehen, ohne dass sich die Vergrößerung unterschiedlich schnell bzw. sprunghaft ändert.

In einer Ausführung der Erfindung ist vorgesehen, dass die Fassung eine Rippe hat, die mit der Linearkulisse korrespondiert, wodurch die Fassung kipp- und rotationsfest relativ zur Innenhülse gelagert ist. Hierdurch wird die Fassung zusätzlich in Position gehalten und besser ausgerichtet, wodurch weniger Reibung entsteht. Zudem ist die Montage stark vereinfacht, da sich die Fassung nicht in der Führungshülse drehen kann, bevor der Führungsstift mit der Fassung verbunden wird. Um eine solche Fassung mit Rippe überhaupt in die Führungshülse einbringen zu können, kann die Linearkulisse bis zu deren Ende reichen und einseitig offen sein, oder aber vorzugsweise auf der Innenseite der Führungshülse als Nut fortgesetzt sein.

Besondere Vorteile ergeben sich daraus, dass die erste Hülse und die zweite Hülse erfindungsgemäß drehbar sind. Je nach Position des Führungsstifts in den Kulissen wirken unterschiedliche Kräfte auf die Hülsen. An dem Bereich, an welchem die größte Kraft von der Kulisse in die Hülse eingeleitet wird, ist die Haftung der Hülse an der kontaktierten Kulisse am größten. Bei einer Verdrehung der Außenhülse zur Führungshülse kann die Hülse nunmehr über diesen Bereich abrollen, wohingegen er in weniger belasteten Bereichen, insbesondere der gegenüber liegenden Seite, über die Kulisse rutscht. Äußerst Vorteilhaft ist dabei weiterhin, dass sich die erste Hülse und die zweite Hülse unterschiedlich schnell und in unterschiedlichen Richtungen verdrehen können. Hierdurch sind die auf die Hülsen wirkenden Scherkräfte gering und Materialschäden werden wirksam vermieden. Zudem sind die notwendigen Verstellkräfte gering und die Umkehrvorrichtung verklemmt selbst bei sehr niedrigen Temperaturen nicht.

Umkehrsysteme mit Führungsstiften die mit drehbaren, axial versetzten und auf einer gemeinsamen Achse benachbart gelagerten Hülsen versehen sind sind aus dem Bereich der Fotokameras und Projektoren bekannt, siehe US 2006/007564 A1 oder JP 2010 113212 A.

Um die Reibung zwischen den zwei Hülsen möglichst gering zu halten ist eine Trennlinie senkrecht zur Achse besonders zu bevorzugen. Zusätzlich kann die Reibung reduziert werden, indem die Anlagefläche zwischen den zwei Hülsen reduziert wird, bspw. dadurch, dass wenigstens eine der Hülsen auf Seiten der Kontaktfläche mit der anderen Hülse im Zentrum etwas länger ist als am Außenradius oder umgekehrt. Hierfür ist bspw. auch eine Fase geeignet.

Es kann zudem vorgesehen sein, dass die erste Hülse die Linearkulisse wenigstens teilweise durchdringt. Dies kann in wenigstens zwei verschiedenen Gestaltungsweisen erfolgen. In einer davon steht die erste Hülse auch mit der Linearkulisse in Kontakt und teilt sich gewissermaßen die Linearkulisse mit der zweiten Hülse. Hierdurch wird der Spannungsübergang, insbesondere aufgrund von Scherspannungen, auf die Achse deutlich reduziert und auch Verkanten an den Übergängen wird vermieden, wodurch die Reibung reduziert ist. In Verbindung mit einer geeigneten Materialwahl für die erste Hülse und die zweite Hülse kann dies zu einem verbesserten Laufverhalten bei tiefen Temperaturen führen. So könnte beispielsweise eine Hülse aus besonders gleitfähigem Material mit einer aus besonders festem Material kombiniert werden. In der anderen Gestaltungsform ragt die erste Hülse in die zweite Hülse hinein, sodass die zweite Hülse ggf. wenigstens teilweise auf der ersten Hülse gelagert ist. So könnte beispielsweise eine besonders feste erste Hülse eine weniger feste zweite Hülse stützen.

Gleichermaßen kann auch vorgesehen sein, dass die zweite Hülse die Außenkulisse wenigstens teilweise durchdringt.

Eine Variante der Erfindung sieht hierbei vor, dass die erste Hülse und die zweite Hülse den gleichen Außendurchmesser haben. Dies setzt dabei gleichsam voraus, dass die Linearkulisse und die Außenkulisse die gleiche Breite haben. Hierunter sind jedoch keine Fertigungstoleranzen oder ein unterschiedliches Übermaß der zwei Hülsen zu verstehen, sondern eine deutliche maßabweichung. Eine gegenteilige Gestaltung ist jedoch ebenfalls möglich, bei der die erste Hülse und die Außenkulisse aufeinander abgestimmt wären und die Linearkulisse auf die zweite Hülse, wobei der Durchmesser der ersten Hülse bspw. doppelt so groß wäre wie der der zweiten Hülse.

Als besonders geeignet hat sich erwiesen, wenn die erste Hülse und die zweite Hülse aus unterschiedlichen Materialien sind, wobei vorzugsweise eine der Hülsen aus Messing und die andere aus Kunststoff ist. So kann beispielsweise eine Hülse aus besonders gleitfähigem Material mit einer aus besonders festem Material kombiniert werden. Insbesondere Messing verfügt über selbstschmierende Eigenschaften, die eine dauerhafte Beweglichkeit unterstützen. Von diesen kann auch eine benachbarte Hülse profitieren, die an der Messinghülse anliegt. Die benachbarte Hülse könnte aus einem Kunststoff hergestellt sein, der positiven elastischen Eigenschaften aufweist und eine Ausbildung der Hülse mit Übermaß erlaubt, wodurch kein Bewegungsspiel auftritt. Besonders bevorzugt ist die zweite Hülse aus Messing zu gestalten und die erste Hülse aus Kunststoff.

Bevorzugt besteht die Achse aus einem Anschlagsabschnitt, einem Lagerabschnitt zur Lagerung der ersten und zweiten Hülse, sowie einem Befestigungsabschnitt zur Befestigung an der Fassung. Der Anschlagsabschnitt hat insbesondere einen Durchmesser, der größer ist als der Innendurchmesser der Hülsen. Dabei kann die erste Hülse einen unteren nach innen gerichteten umlaufenden Rand haben, sodass der Anschlagabschnitt innerhalb der ersten Führungshülse angeordnet ist. Hierdurch ist der Überstand des Anschlagsabschnitts relativ zur Außenhülse minimal und die Umkehrvorrichtung benötigt einen minimalen Bauraum. Dies reduziert wiederum die Größe des Zielfernrohrs, wodurch es leichter und handlicher ist.

Der Befestigungsabschnitt ist vorzugsweise als Gewinde auszubilden, sodass der Führungsstift in die Fassung eingeschraubt werden kann. Hierdurch wird eine einfache und schnelle Montage erreicht. Die Befestigung kann jedoch auch durch ein Einpressen, Nieten oder ähnliches erfolgen.

Eine besonders große Verbesserung zum Stand der Technik wird erfindungsgemäß erreicht, wenn eine zweite Außenkulisse in der Außenhülse angeordnet ist, und in der Führungshülse eine zweite Fassung mit einem zweiten optischen Element und einem die Linearkulisse und die zweite Außenkulisse durchdringenden zweiten Führungsstift axialverschieblich gelagert ist, wobei der zweite Führungsstift eine dritte Hülse und eine vierte Hülse aufweist, und wobei beide Hülsen auf einer gemeinsamen zweiten Achse gelagert sind, und die dritte Hülse innerhalb der zweiten Außenkulisse bewegbar ist und die vierte Hülse innerhalb der Linearkulisse bewegbar ist.

Auch die zweite Außenkulisse kann hierbei als Kurvenbahn ausgebildet sein. Die bei einer solchen Anordnung auftretenden Betätigungskräfte sind circa doppelt so groß wie bei nur einem bewegbaren optischen Element. Dementsprechend kommt einer Reduzierung der Betätigungskräfte besonders große Bedeutung zu, um ein Verklemmen oder eine Selbsthemmung zu verhindern, was erfindungsgemäß mittels der Führungsstifte mit erster, zweiter, dritter und vierter Hülse gelingt. Ein Umkehrsystem mit zwei verschiebbaren optischen Elementen ist zudem länger und weist längere Kulissen auf. Dies führt zu einer erhöhten thermischen Verformung des Umkehrsystems bei Temperaturwechseln, die im Stand der Technik bei sehr niedrigen Temperaturen zu einem Verklemmen führen. Aufgrund der verbesserten Führung der Führungsstifte in den Kulissen ist auch diese Fehleranfälligkeit deutlich reduziert.

Zusätzlich kann die zweite Fassung eine Rippe haben, die mit der Linearkulisse korrespondiert, wodurch die zweite Fassung kipp- und rotationsfest relativ zur Innenhülse gelagert ist. Bevorzugt sind auch die dritte Hülse und/oder die vierte Hülse drehbar, was wie oben ausgeführt eine verbesserte Führung und eine verbesserte Lebensdauer zur Folge hat.

Mögliche Ausgestaltungsvarianten sehen vor, dass die dritte Hülse die Linearkulisse wenigstens teilweise durchdringt und/oder die vierte Hülse die zweite Außenkulisse wenigstens teilweise durchdringt, und/oder dass die dritte Hülse und die vierte Hülse den gleichen Außendurchmesser haben.

Die dritte Hülse und die vierte Hülse können aus unterschiedlichen Materialien sein, wobei vorzugsweise eine der Hülsen aus Messing und die andere aus Kunststoff ist. Besonders bevorzugt ist die vierte Hülse aus Messing zu gestalten und die dritte Hülse aus Kunststoff.

Äquivalent zur ersten Achse kann die zweite Achse ebenfalls aus einem zweiten Anschlagsabschnitt, einem zweiten Lagerabschnitt zur Lagerung der dritten und vierten Hülse, sowie einem zweiten Befestigungsabschnitt zur Befestigung an der zweiten Fassung bestehen.

Die Vorteile die sich aus der Gestaltung des zweiten Führungsstifts ergeben, gleichen inhaltlich denen des ersten Führungsstifts, sie kommen jedoch bei einer Ausgestaltung mit zwei bewegbaren Fassungen mit optischen Elementen besonders zum tragen, da die Stellkräfte größer sind, die Reibung erhöht ist und eine hohe Positionsgenauigkeit von zwei verschiebbaren optischen Elementen zu erzielen ist. Zur Reduktion der Anzahl der Bauteil ist es vorteilhaft, wenn der erste und der zweite Führungsstift baugleich sind. Hierdurch sind die Kosten gering und die Montage einfach.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Längsschnitt durch ein erfindungsgemäßen Umkehrsystem;
- Fig. 2: eine Führungshülse;
- Fig. 3: eine Außenhülse;
- Fig. 4: eine Detailansicht eines Längsschnitts durch einen Führungsstift, der in einem Umkehrsystem angeordnet ist; und
- Fig. 5: einen Ausschnitt eines Längsschnitts durch ein Umkehrsystem mit zwei verschiebbaren optischen Elementen.

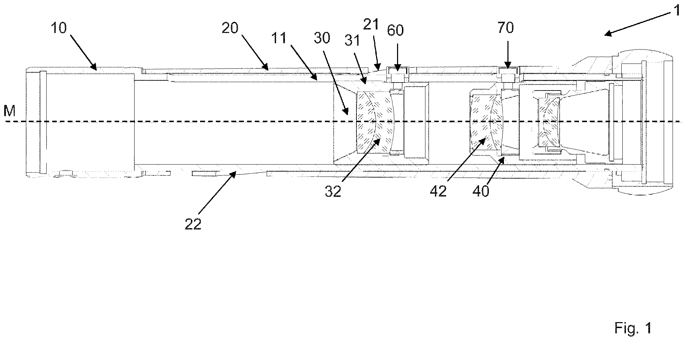

Fig. 1 zeigt einen Längsschnitt durch ein Umkehrsystem 1 für Zielfernrohre mit einer Führungshülse 10 in der eine Linearkulisse 11 angeordnet ist. Eine Außenhülse 20 mit einer Außenkulisse 21 und einer zweiten Außenkulisse 22 ist axialfest und drehbar auf der Führungshülse 10 gelagert. In der Führungshülse 10 ist eine Fassung 30 mit einem optischen Element 32 und mit einem die Linearkulisse 11 und die Außenkulisse 21 durchdringenden Führungsstift 60 axialverschieblich gelagert. Zudem ist in der Führungshülse 10 eine zweite Fassung 40 mit einem zweiten optischen Element 42 und einem die Linearkulisse 11 und die zweite Außenkulisse 22 durchdringenden zweiten Führungsstift 70 axialverschieblich gelagert.

Durch Arretierung der Führungshülse 10 und Drehung der Außenhülse 20 um die Mittelachse M, werden der erste und zweite Führungsstift (60, 70) von der Linearkulisse 11, der Außenkulisse 21 und der zweiten Außenkulisse 22 definiert bewegt, wodurch sich das optische Element 32 und das zweite optische Element 42 innerhalb der Umkehrvorrichtung 1 linear in Richtung der Mittelachse M verschieben.

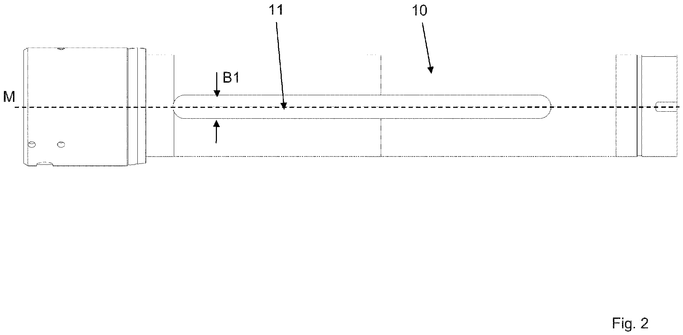

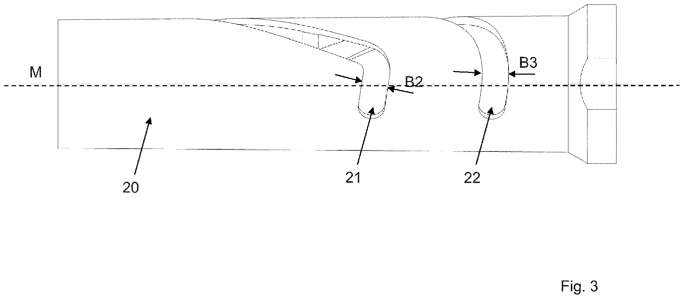

In Fig. 2 findet sich eine Detailansicht einer Führungshülse 10 mit einer Linearkulisse 11. Dabei verläuft die Linearkulisse 11 parallel zur Mittelachse M der Führungshülse 10 und hat eine Breite B1. Eine hierzu passende Außenhülse 20 ist detailliert in Fig. 3 gezeigt. Diese hat zwei als Kurvenbahn ausgebildete Außenkulissen 21, 22, wobei diese an keiner Stelle parallel zur Mittelachse M der Außenhülse 20 verlaufen. Dabei hat die Außenkulisse 21 eine Breite B2 und die zweite Außenkulisse 22 eine Breite B3.

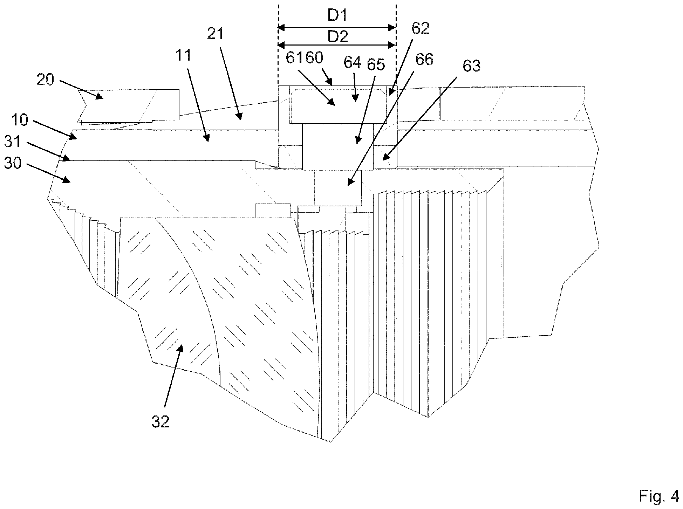

Die Darstellung Fig. 4 zeigt eine Detailansicht eines Längsschnitts durch einen Führungsstift 60, der in einem Umkehrsystem angeordnet ist. Der Führungsstift 60 ist mit einer Fassung 30 verbunden, die ein optisches Element 32 trägt und eine Rippe 31 aufweist. Der Führungsstift 60 durchdringt eine Führungshülse 10 mit einer Linearführung 11 und eine Außenhülse 20 mit einer Außenkulisse 21. Dabei korrespondiert auch die Rippe 31 mit der Linearkulisse 10.

Im Detail ist erkennbar, dass der Führungsstift 60 eine erste Hülse 62 und eine zweite Hülse 63 aufweist, wobei beide Hülsen 62, 63 auf einer gemeinsamen Achse 61 gelagert sind. Letztere besteht aus drei Abschnitten. Insbesondere besteht sie aus einem Anschlagsabschnitt 64, einem Lagerabschnitt 65 zur Lagerung der ersten und zweiten Hülse 62, 63, sowie einem Befestigungsabschnitt 66 zur Befestigung an der Fassung 30. Insbesondere ist jeder der Abschnitte ein zylindrischer Absatz.

Die erste Hülse 62 und die zweite Hülse 63 haben den gleichen Außendurchmesser D1, D2. Weiterhin hat die erste Hülse 62 einen nach innen gerichteten umlaufenden unteren Rand, sodass der Anschlagabschnitt 64 innerhalb der ersten Hülse 62 positioniert ist und kaum über die Außenhülse 20 hinausragt. Dabei kann der Anschlagabschnitt 64 auch eine Lagerungsfunktion für die erste Hülse 62 übernehmen. Gezeigt ist jedoch eine Ausführung, bei der die Lagerung ausschließlich über den Lagerabschnitt 65 erfolgt.

Aus Fig. 4 geht weiterhin hervor, dass die erste Hülse 62 auch die Linearkulisse 11 teilweise durchdringt. Hülse 62 wird somit von der Linearkulisse 11 und der Außenkulisse 21 geführt, wobei die Anlagefläche zur Außenkulisse 21 jedoch deutlich größer ist. Die zweite Hülse 63 hingegen wird ausschließlich von der Linearkulisse 11 geführt. Erkennbar ist weiterhin, dass die beiden Hülsen 62, 63 eine horizontale, d.h. senkrecht zur Achse 61 verlaufende Trennlinie aufweisen. Auf diese Weise ist die Kontaktfläche zwischen den beiden Hülsen 62,63 bereits gering. Zur weiteren Verringerung der Kontaktfläche und somit Reibung zwischen den beiden Hülsen 62, 63, sowie zwischen der Hülse 63 und der Fassung 10, hat die zweite Hülse 62 beidseitig jeweils eine Fase.

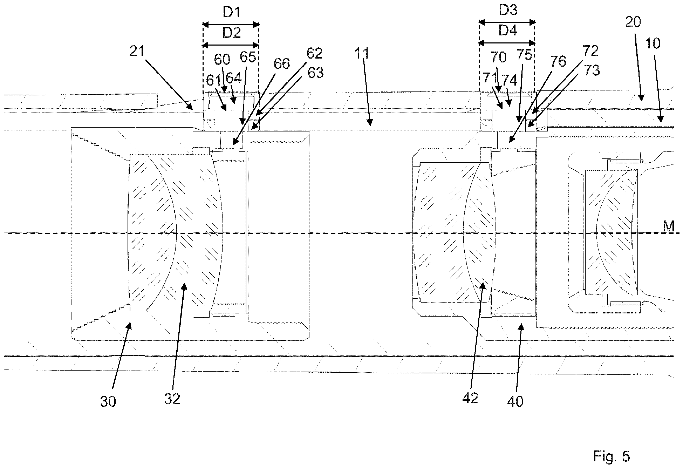

Abschließend zeigt Fig. 5 einen Ausschnitt eines Längsschnitts durch ein Umkehrsystem mit zwei verschiebbaren optischen Elementen 32, 42. Das Umkehrsystem weist eine Führungshülse 10 in der eine Linearkulisse 11 angeordnet ist auf. Eine Außenhülse 20 mit einer Außenkulisse 21 und einer nicht erkennbaren zweiten Außenkulisse ist axialfest und drehbar auf der Führungshülse 10 gelagert. In der Führungshülse 10 ist eine Fassung 30 mit einem optischen Element 32 und mit einem die Linearkulisse 11 und die Außenkulisse 21 durchdringenden Führungsstift 60 axialverschieblich gelagert. Zudem ist in der Führungshülse 10 eine zweite Fassung 40 mit einem zweiten optischen Element 42 und einem die Linearkulisse 11 und die zweite Außenkulisse durchdringenden zweiten Führungsstift 70 axialverschieblich gelagert.

Durch Arretierung der Führungshülse 10 und Drehung der Außenhülse 20 um die Mittelachse M, werden der erste und zweite Führungsstift 60, 70 von der Linearkulisse 11, der Außenkulisse 21 und der zweiten Außenkulisse definiert bewegt, wodurch sich das optische Element 32 und das zweite optische Element 42 innerhalb der Umkehrvorrichtung 1 linear in Richtung der Mittelachse M verschieben.

Im Detail ist erkennbar, dass der Führungsstift 60 eine erste Hülse 62 und eine zweite Hülse 63 aufweist, wobei beide Hülsen 62, 63 auf einer gemeinsamen Achse 61 gelagert sind und den gleichen Außendurchmesser D1, D2 haben. Die Achse 61 besteht aus drei Abschnitten. Insbesondere besteht sie aus einem Anschlagsabschnitt 64, einem Lagerabschnitt 65 zur Lagerung der ersten und zweiten Hülse 62, 63, sowie einem Befestigungsabschnitt 66 zur Befestigung an der Fassung 30.

Gleichsam weist der Führungsstift 70 eine dritte Hülse 72 und eine vierte Hülse 73 auf, wobei beide Hülsen 72, 73 auf einer gemeinsamen Achse 71 gelagert sind. Letztere besteht aus drei Abschnitten. Insbesondere besteht sie aus einem Anschlagsabschnitt 74, einem Lagerabschnitt 75 zur Lagerung der dritten und vierten Hülse 72, 73, sowie einem Befestigungsabschnitt 76 zur Befestigung an der Fassung 40.

Die dritte Hülse 72 und die vierte Hülse 73 haben den gleichen Außendurchmesser D3, D4. Weiterhin haben die erste Hülse 62 und die dritte Hülse 72 einen nach innen gerichteten umlaufenden unteren Rand, sodass die Anschlagabschnitte 64, 74 innerhalb der ersten Hülse 62, bzw. innerhalb der dritten Hülse 72 positioniert sind und kaum über die Außenhülse 20 hinausragen.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Umkehrsystem | 64 | Anschlagsabschnitt |
| | | 65 | Lagerabschnitt |
| 10 | Führungshülse | 66 | Befestigungsabschnitt |
| 11 | Linearkulisse | | |
| | | 70 | zweiter Führungsstift |
| 20 | Außenhülse | 71 | zweite Achse |
| 21 | Außenkulisse | 72 | dritte Hülse |
| 22 | zweite Außenkulisse | 73 | vierte Hülse |
| | | 74 | zweiter Anschlagsabschnitt |
| 30 | Fassung | 75 | zweiter Lagerabschnitt |
| 31 | Rippe | 76 | zweiter Befestigungsabschnitt |
| 32 | optisches Element | | |
| | | B1 | Breite |
| 40 | zweite Fassung | B2 | Breite |
| 42 | zweites optisches Element | D1 | Außendurchmesser |
| | | D2 | Außendurchmesser |
| 60 | Führungsstift | D3 | Außendurchmesser |
| 61 | Achse | D4 | Außendurchmesser |
| 62 | erste Hülse | M | Mittelachse |
| 63 | zweite Hülse | | |

## Patentansprüche

1. Umkehrsystem (1) für Zielfernrohre mit einer Führungshülse (10) in der eine Linearkulisse (11) angeordnet ist, wobei eine Außenhülse (20) mit einer Außenkulisse (21) axialfest und drehbar auf der Führungshülse (10) gelagert ist, und in der Führungshülse (10) eine Fassung (30) mit einem optischen Element (32) und mit einem die Linearkulisse (11) und die Außenkulisse (21) durchdringenden Führungsstift (60) axialverschieblich gelagert ist, **dadurch gekennzeichnet, dass** der Führungsstift (60) eine erste Hülse (62) und eine zweite Hülse (63) aufweist, wobei beide Hülsen (62, 63) axial versetzt und benachbart auf einer gemeinsamen Achse (61) gelagert sind, und die erste Hülse (62) innerhalb der Außenkulisse (21) bewegbar ist und die zweite Hülse (63) innerhalb der Linearkulisse (11) bewegbar ist, wobei die erste und zweite Hülse (62,63) drehbar sind.

2. Umkehrsystem (1) nach Anspruch 1, **dadurch gekennzeichnet, dass** die Außenkulisse (21) eine Kurvenbahn ist.

3. Umkehrsystem (1) nach einem der Ansprüche 1 oder 2, **dadurch gekennzeichnet, dass** die Fassung (30) eine Rippe (31) hat, die mit der Linearkulisse (11) korrespondiert, wodurch die Fassung (30) kipp- und rotationsfest relativ zur Innenhülse (10) gelagert ist.

4. Umkehrsystem (1) nach einem der vorhergehenden Ansprüche, **dadurch gekennzeichnet, dass** die erste Hülse (62) die Linearkulisse (11) wenigstens teilweise durchdringt.

5. Umkehrsystem (1) nach einem der vorhergehenden Ansprüche, **dadurch gekennzeichnet, dass** die zweite Hülse (63) die Außenkulisse (21) wenigstens teilweise durchdringt.

6. Umkehrsystem (1) nach einem der vorhergehenden Ansprüche, **dadurch gekennzeichnet, dass** die erste Hülse (62) und die zweite Hülse (63) den gleichen Außendurchmesser (D1, D2) haben.

7. Umkehrsystem (1) nach einem der vorhergehenden Ansprüche, **dadurch gekennzeichnet, dass** die erste Hülse (62) und die zweite Hülse (63) aus unterschiedlichen Materialien sind, wobei vorzugsweise eine der Hülsen (62, 63) aus Messing und die andere aus Kunststoff ist.

8. Umkehrsystem (1) nach einem der vorhergehenden Ansprüche, **dadurch gekennzeichnet, dass** die Achse (61) aus einem Anschlagsabschnitt (64), einem Lagerabschnitt (65) zur Lagerung der ersten und zweiten Hülse (62, 63), sowie einem Befestigungsabschnitt (66) zur Befestigung an der Fassung (30) besteht.

9. Umkehrsystem (1) nach einem der vorhergehenden Ansprüche, **dadurch gekennzeichnet, dass** eine zweite Außenkulisse (22) in der Außenhülse (20) angeordnet ist, und in der Führungshülse (10) eine zweite Fassung (40) mit einem zweiten optischen Element (42) und einem die Linearkulisse (11) und die zweite Außenkulisse (22) durchdringenden zweiten Führungsstift (70) axialverschieblich gelagert ist, wobei der zweite Führungsstift (70) eine dritte Hülse (72) und eine vierte Hülse (73) aufweist, und wobei beide Hülsen (72, 73) auf einer gemeinsamen zweiten Achse (71) gelagert sind, und die dritte Hülse (72) innerhalb der zweiten Außenkulisse (22) bewegbar ist und die vierte Hülse (73) innerhalb der Linearkulisse (11) bewegbar ist.

10. Umkehrsystem (1) nach Anspruch 9, **dadurch gekennzeichnet, dass** die dritte Hülse (72) und/oder die vierte Hülse (73) drehbar sind.

11. Umkehrsystem (1) nach einem der Ansprüche 9 oder 10, **dadurch gekennzeichnet, dass** die dritte Hülse (72) die Linearkulisse (11) wenigstens teilweise durchdringt und/oder die vierte Hülse (73) die zweite Außenkulisse (22) wenigstens teilweise durchdringt.

12. Umkehrsystem (1) nach einem der Ansprüche 9 bis 11, **dadurch gekennzeichnet, dass** die dritte Hülse (72) und die vierte Hülse (73) den gleichen Außendurchmesser (D3, D4) haben.

13. Umkehrsystem (1) nach einem der Ansprüche 9 bis 12, **dadurch gekennzeichnet, dass** die dritte Hülse (72) und die vierte Hülse (73) aus unterschiedlichen Materialien sind, wobei vorzugsweise eine der Hülsen (72, 73) aus Messing und die andere aus Kunststoff ist.

14. Umkehrsystem (1) nach einem der Ansprüche 9 bis 13, **dadurch gekennzeichnet, dass** die zweite Achse (71) aus einem zweiten Anschlagsabschnitt (74), einem zweiten Lagerabschnitt (75) zur Lagerung der dritten und vierten Hülse (72, 73), sowie einem zweiten Befestigungsabschnitt (76) zur Befestigung an der zweiten Fassung (40) besteht.

## Claims

1. Inversion system (1) for telescopic sights having a guiding sleeve (10) in which a linear slotted link (11) is arranged, wherein an outer sleeve (20) is supported with an outer slotted link (21) in an axially secure and rotatable manner on the guiding sleeve (10), and a mounting (30) having an optical element (32) and having a guiding pin (60) which extends through the linear slotted link (11) and the outer slotted link (21) is supported in the guiding sleeve (10) so as to be able to be axially displaced, **characterised in that** the guiding pin (60) has a first sleeve (62) and a second sleeve (63), wherein both sleeves (62, 63) are supported on a common axle (61) so as to be axially displaced and adjacent, and the first sleeve (62) can be moved inside the outer slotted link (21) and the second sleeve (63) can be moved inside the linear slotted link (11), wherein the first and the second sleeve (62, 63) can be rotated.

2. Inversion system (1) according to Claim 1, **characterised in that** the outer slotted link (21) is a curved path.

3. Inversion system (1) according to either Claim 1 or 2, **characterised in that** the mounting (30) has a rib (31) which corresponds to the linear slotted link (11), whereby the mounting (30) is supported so as to be fixed in terms of tilting and rotation relative to the inner sleeve (10).

4. Inversion system (1) according to any one of the preceding claims, **characterised in that** the first sleeve (62) at least partially extends through the linear slotted link (11).

5. Inversion system (1) according to any one of the preceding claims, **characterised in that** the second sleeve (63) at least partially extends through the outer slotted link (21).

6. Inversion system (1) according to any one of the preceding claims, **characterised in that** the first sleeve (62) and the second sleeve (63) have the same outer diameter (D1, D2).

7. Inversion system (1) according to any one of the preceding claims, **characterised in that** the first sleeve (62) and the second sleeve (63) are of different materials, wherein one of the sleeves (62, 63) is preferably of brass and the other of plastics material.

8. Inversion system (1) according to any one of the preceding claims, **characterised in that** the axle (61) comprises a stop portion (64), a bearing portion (65) for supporting the first and second sleeve (62, 63) and a securing portion (66) for securing to the mounting (30).

9. Inversion system (1) according to any one of the preceding claims, **characterised in that** a second outer slotted link (22) is arranged in the outer sleeve (20) and a second mounting (40) having a second optical element (42) and a second guiding pin (70) which extends through the linear slotted link (11) and the second outer slotted link (22) is supported in the guiding sleeve (10) so as to be axially displaceable, wherein the second guiding pin (70) has a third sleeve (72) and a fourth sleeve (73), and wherein both sleeves (72, 73) are supported on a common second axle (71), and the third sleeve (72) can be moved inside the second outer slotted link (22) and the fourth sleeve (73) can be moved inside the linear slotted link (11).

10. Inversion system (1) according to Claim 9, **characterised in that** the third sleeve (72) and/or the fourth sleeve (73) is rotatable.

11. Inversion system (1) according to either Claim 9 or 10, **characterised in that** the third sleeve (72) extends at least partially through the linear slotted link (11) and/or the fourth sleeve (73) extends at least partially through the second outer slotted link (22).

12. Inversion system (1) according to any one of Claims 9 to 11, **characterised in that** the third sleeve (72) and the fourth sleeve (73) have the same outer diameter (D3, D4).

13. Inversion system (1) according to any one of Claims 9 to 12, **characterised in that** the third sleeve (72) and the fourth sleeve (73) are of different materials, wherein one of the sleeves (72, 73) is preferably of brass and the other of plastics material.

14. Inversion system (1) according to any one of Claims 9 to 13, **characterised in that** the second axle (71) comprises a second stop portion (74), a second bearing portion (75) for supporting the third and fourth sleeves (72, 73), and a second securing portion (76) for securing to the second mounting (40).

## Revendications

1. Système d'inversion (1) pour lunette de visée avec un manchon de guidage (10) dans lequel est agencée une coulisse linéaire (11), un manchon extérieur (20) avec une coulisse extérieure (21) étant logé, rotatif mais fixe de façon axiale, sur le manchon de guidage (10) et une monture (30) avec un élément optique (32) et avec une tige de guidage (60) qui traverse la coulisse linéaire (11) et la coulisse extérieure (21) étant logée de manière à pouvoir être déplacée de façon axiale dans le manchon de guidage (10), **caractérisé en ce que** la tige de guidage (60) comporte un premier manchon (62) et un deuxième manchon (63), les deux manchons (62, 63) étant logés, décalés de façon axiale et au voisinage l'un de l'autre, sur un axe commun (61), le premier manchon (62) étant mobile à l'intérieur de la coulisse extérieure (21) et le deuxième manchon (63) étant mobile à l'intérieur de la coulisse linéaire (11), le premier et le deuxième manchon (62, 63) étant rotatifs.

2. Système d'inversion (1) selon la revendication 1, **caractérisé en ce que** la coulisse extérieure (21) a une trajectoire incurvée.

3. Système d'inversion (1) selon l'une des revendications 1 ou 2, **caractérisé en ce que** la monture (30) a une nervure (31) qui correspond à la coulisse linéaire (11), la monture (30) étant ainsi logée solidaire en basculement et en rotation par rapport au manchon intérieur (10).

4. Système d'inversion (1) selon l'une des revendications précédentes, **caractérisé en ce que** le premier manchon (62) traverse au moins partiellement la coulisse linéaire (11).

5. Système d'inversion (1) selon l'une des revendications précédentes, **caractérisé en ce que** le deuxième manchon (63) traverse au moins partiellement la coulisse extérieure (21).

6. Système d'inversion (1) selon l'une des revendications précédentes, **caractérisé en ce que** le premier manchon (62) et le deuxième manchon (63) ont le même diamètre extérieur (D1, D2).

7. Système d'inversion (1) selon l'une des revendications précédentes, **caractérisé en ce que** le premier manchon (62) et le deuxième manchon (63) sont en des matériaux différents, l'un des manchons (62, 63) étant de préférence en laiton et l'autre en plastique.

8. Système d'inversion (1) selon l'une des revendications précédentes, **caractérisé en ce que** l'axe (61) est constitué d'un tronçon de butée (64), d'un tronçon de logement (65) pour le logement du premier et du deuxième manchon (62, 63) ainsi que d'un tronçon de fixation (66) pour la fixation à la monture (30).

9. Système d'inversion (1) selon l'une des revendications précédentes, **caractérisé en ce qu'**une deuxième coulisse extérieure (22) est agencée dans le manchon extérieur (20) et une deuxième monture (40) avec un deuxième élément optique (42) et avec une deuxième tige de guidage (70) qui traverse la coulisse linéaire (11) et la deuxième coulisse extérieure (22) est logée de manière à pouvoir être déplacée de façon axiale dans le manchon de guidage (10), la deuxième tige de guidage (70) comportant un troisième manchon (72) et un quatrième manchon (73), les deux manchons (72, 73) étant logés sur un deuxième axe commun (71), le troisième manchon (72) étant mobile à l'intérieur de la deuxième coulisse extérieure (22) et le quatrième manchon (73) étant mobile à l'intérieur de la coulisse linéaire (11).

10. Système d'inversion (1) selon la revendication 9, **caractérisé en ce que** le troisième manchon (72) et/ou le quatrième manchon (73) sont rotatifs.

11. Système d'inversion (1) selon l'une des revendications 9 ou 10, **caractérisé en ce que** le troisième manchon (72) traverse au moins partiellement la coulisse linéaire (11) et/ou le quatrième manchon (73) traverse au moins partiellement la deuxième coulisse extérieure (22).

12. Système d'inversion (1) selon l'une des revendications 9 à 11, **caractérisé en ce que** le troisième manchon (72) et le quatrième manchon (73) ont le même diamètre extérieur (D3, D4).

13. Système d'inversion (1) selon l'une des revendications 9 à 12, **caractérisé en ce que** le troisième manchon (72) et le quatrième manchon (73) sont en des matériaux différents, l'un des manchons (72, 73) étant de préférence en laiton et l'autre en plastique.

14. Système d'inversion (1) selon l'une des revendications 9 à 13, **caractérisé en ce que** le deuxième axe (71) est constitué d'un deuxième tronçon de butée (74), d'un deuxième tronçon de logement (75) pour le logement du troisième et du quatrième manchon (72, 73) ainsi que d'un deuxième tronçon de fixation (76) pour la fixation à la deuxième monture (40).
